(19) Europäisches Patentamt
European Patent Office
Office européen des brevets

(11) **EP 2 069 817 B1**

(12) **EUROPEAN PATENT SPECIFICATION**

(45) Date of publication and mention of the grant of the patent:
**16.05.2012 Bulletin 2012/20**

(21) Application number: **07753373.5**

(22) Date of filing: **16.03.2007**

(51) Int Cl.:
**G01S 19/25** (2010.01)

(86) International application number:
**PCT/US2007/006740**

(87) International publication number:
**WO 2008/115174 (25.09.2008 Gazette 2008/39)**

(54) **A METHOD AND SYSTEM FOR ALL-IN-VIEW COHERENT GPS SIGNAL PRN CODES ACQUISITION AND NAVIGATION SOLUTION DETERMINATION**

VERFAHREN UND SYSTEM ZUR KOHÄRENTEN ALL-IN-VIEW-GPS-SIGNAL-PRN-CODEBESCHAFFUNG UND NAVIGATIONSLÖSUNGSBESTIMMUNG

PROCÉDÉ ET SYSTÈME D'ACQUISITION DE CODES DE BRUIT PSEUDO-ALÉATOIRE DE SIGNAL GPS COHÉRENT AVEC SUIVI DE TOUS LES SATELLITES VISIBLES ( ALL-IN-VIEW )

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**17.06.2009 Bulletin 2009/25**

(73) Proprietor: **The Boeing Company**
**Chicago, IL 60606-2016 (US)**

(72) Inventor: **DI ESPOSTI, Raymond, S.**
**Lakewood, CA 90713 (US)**

(74) Representative: **Howson, Richard G.B. et al**
**Kilburn & Strode LLP**
**20 Red Lion Street**
**London WC1R 4PJ (GB)**

(56) References cited:
**EP-A- 1 146 349      WO-A-00/36431**

- **SHEYNBLAT L. AND KRESNER N.: "Description of a Wireless Integrated SmartServer/Client System Architecture" PROCEEDINGS OF ION 55TH ANNUAL MEETING, 28 June 1999 (1999-06-28), pages 667-675, XP002444231 Cambridge, MA, USA**
- **DI ESPOSTI, R.: "GPS PRN Code Signal Processing and Receiver Design for Simultaneous All-in-View Coherent Signal Acquisition and Navigation Solution Determination" PROCEEDINGS OF ION NTM 2007, 22 January 2007 (2007-01-22), pages 91-103, XP002444232 San Diego, CA, USA**

**Description**

BACKGROUND

The present invention relates to a method and system for global positioning (GP). More specifically, the present invention relates to a method and system for acquiring global positioning system (GPS) signals from satellites to determine a location of a GPS user receiver.

For decades, the ability to obtain real time location and position information for mobile platforms and/or individuals has been a highly sough after technology. Since the implementation of the Global Positioning System (GPS), a world-wide radio navigation system introduced by the U.S. Air Force, this has become a reality. The GPS includes a constellation of satellites, ground or base stations, and at least one GPS user receiver.

The locations of the satellites are used as reference points to calculate positions of the GPS user receiver, which is usually accurate to within meters, and sometimes even within centimeters. Each of the satellites, the ground stations, and the GPS user receiver has preprogrammed timed signals that start at precise times. In order to lock on to the signals broadcasted by the satellites, the ground station and GPS user receiver slew their respective internal generated signals relative to time as predicted by their respective internal clocks. When the signals are locked, the GPS user receiver makes ranging measurements to each satellite called pseudoranges. These pseudorange measurements include the actual ranges to the satellites, in addition to an error associated with the receiver clock time offset relative to GPS time, plus other smaller errors. The ground stations included in the GPS control segment network provide ranging measurements which are used to generate predictions for the satellites clocks and orbits. These predictions are periodically uploaded to the satellites and the satellites broadcast this data to the user receiver to support the user receiver positioning function.

Each satellite transmits a GPS satellite signal, including a unique Pseudo-Random Noise (PRN) Code and a Navigation (Nav) message, on two carrier frequencies, L1 and L2. The L1 carrier is 1575.42 MHz and carries both the Nav message and the pseudo-random noise code for timing. The L2 carrier is 1227.60 MHz. The L2 signal is normally used for military purposes and is a more precise and complicated pseudo-random noise code. There are two types of PRN codes, called Coarse Acquisition (C/A) code and Precise (P) code. The C/A code, intended for civilian use, modulates the L1 carrier at a rate of 1.023 MHz and repeats every 1023 bits, thus the length of the C/A code is one millisecond. The P code, intended for military use, repeats on a seven-day cycle and modulates both the L1 and L2 carriers at a 10.23 MHz rate. When the P code is encrypted, it is called the "Y" code. Additionally, the Nav message is a low frequency signal added to the codes on L1 and L2 that gives information about the satellites' orbits, their clocks corrections and other system status. Ideally, as the GPS satellite ranging signals are broadcast to Earth, the GPS satellite ranging signals would directly reach the GPS user receiver with a range delay associated with speed of light propagation through a vacuum in an inertial reference system. However, along the route to the GPS user receiver, the GPS satellite ranging signals encounter some sources that cause the GPS satellite signals to be delayed in addition to the path delay associated with the speed of light propagation relative to range prediction models, and thus in error. The potential sources of such delays and errors include satellite ephemeris and clock errors, selective availability (SA), ionospheric and atmospheric effects, multi-paths, and receiver clock error.

In order to reduce or eliminate the delays and errors in the GPS satellite ranging signals, other ground stations, called differential GPS ground stations, are often used. Each differential ground station is stationary and ties all the satellite signal measurements into a local reference. Additionally, a differential ground station closest to the GPS user receiver receives the GPS satellite ranging signals containing the same delays and errors related to the GPS satellite signals as the GPS satellite signals acquired and tracked by the GPS user receiver for the same epoch time. The differential ground station is typically within a few tens of kilometers of the GPS user receiver. The differential ground station measures the range delay or timing errors and then provides this correction information to the GPS user receiver over a radio frequency (RF) wireless communications link. The GPS user receiver may be stationary for the time being, or may be roaming. The GPS user receiver applies these corrections to its ranging measurements to reduce the above errors. The differential ground station knows its fixed position and calculates an expected travel time for each GPS satellite signal. The calculation is based on a broadcast ephemeris of where each satellite should be positioned in space. The differential ground station compares a calculated travel time for the satellite ranging signals to an actual travel time measured for the signals, for all the satellites to determine the error correction information related to the signals for each satellite. The differential ground station then transmits the error correction information for each satellite to the GPS user receiver.

For conventional signal processing, when the GPS user receiver is first turned ON or activated to begin processing GPS signals, it searches for, acquires and locks on to the GPS satellite ranging signals from multiple satellites in view. The GPS user receiver also make distance measurements (called pseudoranges) for each satellite PRN code signal in view of the GPS user receiver, demodulate the Nav message data superimposed on the PRN code signals, apply any error corrections sent to it from the ground station if operating in the differential GPS mode, and uses this information to solve for the GPS user receiver's position and user receiver clock offset relative to GPS time. Additionally, in order to determine the distance between any satellite in view and the GPS user receiver, the GPS user receiver determines the actual travel time for the signal propagation delay and applies the error correction information received from the base station to calculate corrected travel time. The corrected travel time is then multiplied by the speed of light to determine the distance to the signal sending satellite. After acquiring the GPS satellite ranging signals of at least four satellites, the GPS user receiver solves for its position and time error relative to GPS time.

The conventional method of acquiring the GPS satellite ranging signals provides for the GPS user receiver to acquire one GPS satellite signal at a time. Signal acquisition is generally the most fragile phase associated with the GPS user receiver. One reason is that the C/A code is weak and a small level of interference, intermittent attenuation, or obstruction of the Line-of-Sight (LOS) from a satellite to the GPS user receiver can cause the acquisition process to fail for one or more of the ranging signals.

It would therefore be desirable to even further improve the ranging signal acquisition process in a manner that better ensures that rapid, reliable and robust acquisition of the ranging signals can be made by a GPS user receiver in challenged environments associated with signal power attenuation or interference, e. g. in-doors, under foliage, or under jamming conditions.

International publication number WO 00/36431 discloses a method and apparatus for acquiring satellite positioning system signals. Information on time of day, approximate receiver location, and satellite positions are used to reduce the time to search and acquire signals from one or more satellite positioning systems satellites.

## SUMMARY

The present disclosure provides a method and system to detect and acquire simultaneously a plurality of satellite ranging signals from each of a plurality of satellites in view of a GPS user receiver while simultaneously estimating a location of the GPS user receiver as defined in the appended claims.

The method involves using inputs from the plurality of satellites that are in view of a global positioning system (GPS) user receiver. A wireless assist signal from a differential base station is used to provide to the GPS user receiver a set of initialization data, user location assist data, and a GPS time synch function to limit an Earth-referenced search space grid. Searching over the search space grid is performed while utilizing the initialization and user location assist data, and the GPS time synch function, to acquire simultaneously the plurality of satellite ranging signals from the plurality of satellites in view of the user receiver.

A further aspect of the method includes providing frequency aiding to reduce or eliminate the frequency search space and enable longer coherent integration times for user receiver signal processing. Additionally, the method involves adjusting signal phases for each of the plurality of satellite ranging signals received for any change in satellite motion since epoch time. Furthermore, the method provides coherently combining correlator outputs from a plurality of received satellite ranging signals at each grid point location to produce a power output corresponding to a combined power of the plurality of satellite ranging signals processed. A determination is then made as to whether the combined power output indicates a probable location for the GPS user receiver.

A global positioning system (GPS) using inputs from a plurality of satellites in view of a GPS user receiver is also provided. The system includes a plurality of GPS satellites, a station, and at least one GPS user receiver. The plurality of GPS satellites is configured to produce a plurality of GPS satellite ranging signals, wherein each GPS satellite signal includes a PRN code. Additionally, the base station is configured to generate a set of initialization data to limit a search to a predetermined search area grid. The base station is further configured to receive the plurality of GPS satellite ranging signals to produce time and frequency aiding data. This helps to reduce the search space to aid acquisition of the plurality of GPS satellite ranging signals and reduce the size of the search space or extend the duration of signal processing coherent integration time. The GPS user receiver is in wireless communication with the plurality of satellites and the base station. The GPS user receiver is configured to receive the plurality of GPS satellite ranging signals from the plurality of satellites in view along with the time and frequency aiding data, and to search over at least one carrier phase combination within the search area grid at a grid point location. The GPS user receiver is further configured to coherently combine correlator outputs from the plurality of GPS satellite ranging signals from the plurality of satellites in view, and produce a power output. Using the power output, the GPS user receiver simultaneously estimates its location by selecting that one grid point which corresponds to the maximum combined signal power over all of the search grid points.

The method and system of the present disclosure allow for a more robust detection of GPS satellite ranging signals based on a simultaneous, all-in-view coherent PRN code signal processing scheme rather than acquisition of GPS signals one at a time. Additionally, the method and system may enable 10 dB or more improvement in signal-to-ratio (SNR) acquisition performance of the combined signals when compared to conventional acquisition approaches of acquiring GPS PRN code signals one at a time. The method and system also automatically enables removal of ranging errors common to both the user and base station and minimizes the introduction of multi-path errors into code phase measurements.

Further areas of applicability of the present invention will become apparent from the detailed description provided hereinafter. It should be understood that the detailed description and specific examples, while indicating various preferred embodiments of the invention, are intended for purposes of illustration only and are not intended to limit the scope of the invention.

BRIEF DESCRIPTION OF THE DRAWINGS

The present invention will become more fully understood from the detailed description and the accompanying drawings, wherein:

Figure 1 is a flow chart of a method of the present disclosure for using inputs from a plurality of satellites that are in view of a global positioning system (GPS);
Figure 2 is a block diagram of an exemplary system used to implement the method of Figure 1; and
Figure 3 is a graph illustrating an example of a two-dimensional search area used to acquire simultaneously the ranging signal inputs from all of the satellites.

DETAILED DESCRIPTION

The following description of various embodiments is merely exemplary in nature and is in no way intended to limit the present disclosure, its application, or uses.

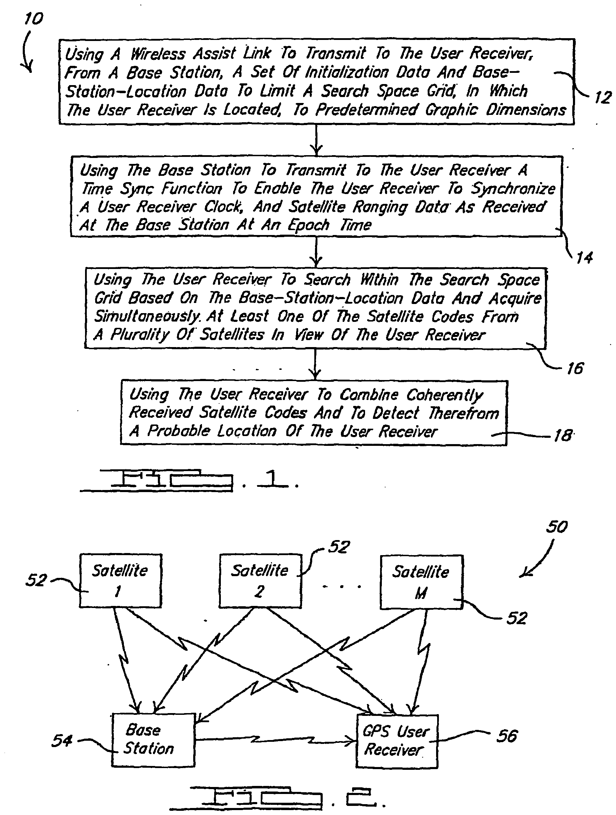

Referring to Figure 1, the present disclosure illustrates a method 10 for using inputs from a plurality of satellites that are in view of a global positioning system (GPS). The plurality of satellites includes at least three satellites up to all satellites in view of the user receiver. The method includes using a wireless assist link to transmit to the user receiver, from a base station, a set of initialization data and base-station-location data at operation 12. The set of initialization data includes almanac or satellite ephemeris and clock data, size or boundary data, and satellite ranging signal data including satellite ranging signal measurement data. The boundary data comprises predetermined geographic dimensions to limit a search space grid, in which the user receiver is located. At operation 14, the method also provides using the base station to transmit to the user receiver a GPS time synch function to allow the user receiver to synchronize its internal clock, and satellite ranging data as measured at the base station and used to synchronize reception of the satellite codes in view of the user receiver.

After the GPS time synch function and other transmitted data are received by the user receiver, the user receiver starts a search within the search space grid based on the set of initialization data provided by the base station, and acquires simultaneously a satellite code from each of the plurality of satellites in view of the user receiver, as indicated at operation 16. Even more, the user receiver may acquire all of a plurality of satellite PRN codes simultaneously from all satellites in view of the user receiver. At operation 18, while the user receiver is searching grid points in the search space grid, it coherently combines a power output of each received satellite PRN code to determine a probable location of the user receiver. More specifically, the user receiver searches the search space gird, sums coherently the power output related to each received satellite code for a plurality of grid point locations within the search space grid, and determines which grid point provides a maximum combined power output for the received satellite codes. The maximum combined power output indicates a highest combined power output at a particular grid point location to identify the probable location of the user receiver.

Referring to Figure 2, a global positioning system (GPS) 50 of the present disclosure is shown for implementing the above-described operations. The GPS 50 comprises a plurality of GPS satellites 52, a base station 54, and a GPS user receiver 56, or user terminal. The satellites 52 are each in wireless communication with the user receiver 56 and the base station 54. Additionally, the base station 54 is in wireless communication with the user receiver 56.

The locations of the satellites 52 are used as reference points to assist signal processing in order to determine the location of the user receiver 56. The satellites 52 comprise a constellation of "M" number of satellites in the Earth's orbit that are in view of the user receiver 56. Each one of the satellites 52 broadcasts one or more precisely synchronized GPS satellite ranging signals toward the Earth. The GPS ranging satellite signals include a Pseudo Random Noise (PRN) Code and Navigation (Nav) message carried on carrier frequency, such as an L1 and/or L2 carrier frequency. The L1 carrier is 1575.42 MHz and carries both the Nav message and the PR code for timing. The L2 carrier is 1227.60 MHz.

There are two types of PRN codes called Coarse Acquisition (C/A) code and Precise (P) code. The C/A code, intended for civilian use, modulates the L1 carrier at a rate of 1.023 MHz and repeats every 1023 bits. The P code, intended for military use, repeats on a seven-day cycle and modulates both the L1 and L2 carriers at a 10.23 MHz rate. When the P code is encrypted, it is called the "Y" code. Additionally, the Nav message is a low frequency signal added to the PRN codes that gives information about its satellite's orbit, clock corrections and other system status information.

As technology progresses, the satellites 52 may include more civilian and military codes on the L1 and L2 carriers and an additional carrier frequency called L5. For example, a satellite 52 may include two military codes and one civil signal code on the L1 carrier, two military codes and one civil signal code in on the L2 carrier, and two civil codes on the L5 carrier. Additionally, instead of GPS navigation system satellites 52, the satellites 52 may comprise other existing satellite navigation systems satellites, such as, for example, Wide Area Augmentation System (WAAS) satellites developed by the Federal Aviation Administration (FAA) and the Department of Transportation (DOT) or Galileo satellite radio navigation system satellites, an initiative launched by the European Union and the European Space Agency. Without loss of generality, the system 50 may incorporate GPS codes, or codes of other satellite navigation system signals, if available, e.g. an integrated GPS-Galileo user receiver.

The base station 54 comprises a ground station that is a stationary receiver located at an accurately surveyed point. The base station 54 receives the GPS satellite ranging signals from each of the satellites 52. As each GPS satellite ranging signal is received by the base station 54 and the user receiver 56, the satellite signals may be adversely affected by ionosphere or atmospheric conditions, error in the GPS broadcast ephemeris and clock data, by multipath conditions, or other factors that may cause errors in the ranging signals reaching the base station 54 or the user receiver 56. The base station 54 transmits additional aiding data such as an unique set of initialization data, base-station-location data and size or boundary data. The set of initialization data includes GPS almanac or satellite ephemeris and clock data, and PRN ranging data including base station ranging measurements as received at the base station 54. The boundary data comprises predetermined geographic dimensions to limit a search space grid in which the user receiver 56 is located.

The user receiver 56 searches within the search space grid based on the base-station-location data and acquires simultaneously at least one of the satellite codes from the satellites 52 in view of the user receiver 56. Additionally, the user receiver 56 may acquire simultaneously all of the satellite ranging codes from all of the satellites in view of the user receiver 56 in order to combine coherently, such as summing coherently, received satellite codes and to detect therefrom a probable location of the user receiver 56. The user receiver 56 coherently combines, or sums, a power output of each of received GPS ranging signals at each of the plurality of grid point locations within the predetermined geographic area, to determine a maximum power output value. The user receiver 56 uses the maximum power output value to extrapolate a probable location of the user terminal. The maximum power output value is indicative of a highest summed power output of all PRN codes present for each of the grid point locations, that identifies the probable location of the user receiver 56. The following paragraphs more specifically describe the functionally of the user receiver 56.

Through the wireless assist link, the user receiver 56 receives the set of initialization data to aid acquisition along with the base-station-location data, and the boundary data to assist in the acquisition search. Additionally, over the wireless link, the user receiver 56 is provided the GPS time synch function to reduce the search space grid associated with an unknown user clock error. The user receiver 56 also receives data on the accuracy of the time synch for use in the search from the base station 54, or time synch accuracy is inferred by the user receiver 56 based on the boundary data. Additionally, the user receiver 56 may utilize a time aiding function and a frequency aiding function to reduce user receiver clock error in order to reduce time search space.

The time aiding function may take on several forms, such as GPS time transfer or time sampling control method. The time transfer method provides a GPS time synch function to the user receiver 56 using an external RF aiding signal. On the other hand, the time sampling control method includes the base station 54 providing a command to the user receiver 56 to sample the GPS satellite ranging signal at a time epoch close to a time epoch used by the base station 54 to measure the GPS satellite ranging signals.

Frequency aiding may be implemented by the user receiver 56 by implementing signal phase or frequency lock (e.g. phase lock loop (PLL)) onto a base station radio frequency (RF) carrier signal. If a base station signal is generated using a high-quality ovenized crystal oscillator (OCXO), the user receiver PLL will provide a frequency reference that is accurate and stable enough to reduce or eliminate frequency search. The user receiver PLL frequency reference will also support coherent integration times up to one second duration, following compensation for Doppler and motion of each of the satellites 52 relative to the user receiver 56.

Using the almanac or ephemeris data, the user receiver 56 determines the number of GPS-satellite-ranging code signals in view for use to determine its location within the search space grid. The search space grid comprises a two-dimensional search grid. The search space grid alternately may comprise a three-dimensional search grid. For example, in order to determine a location for the two-dimensional search space grid, at least three satellites 54 in view of the user receiver 56 will be needed. On the other hand, at least four satellites 54 are needed in order to determine a location of the user receiver 56 within a three-dimensional search grid. Additionally, the user receiver 56 adjusts PRN coders to predictable offsets given by the following Equations or a variation thereof, to correlate simultaneously the GPS satellite PRN code signals received from each of the "M" satellites 52 in view in order to simultaneously detect the presence of all of the signals at some probable grid point location.

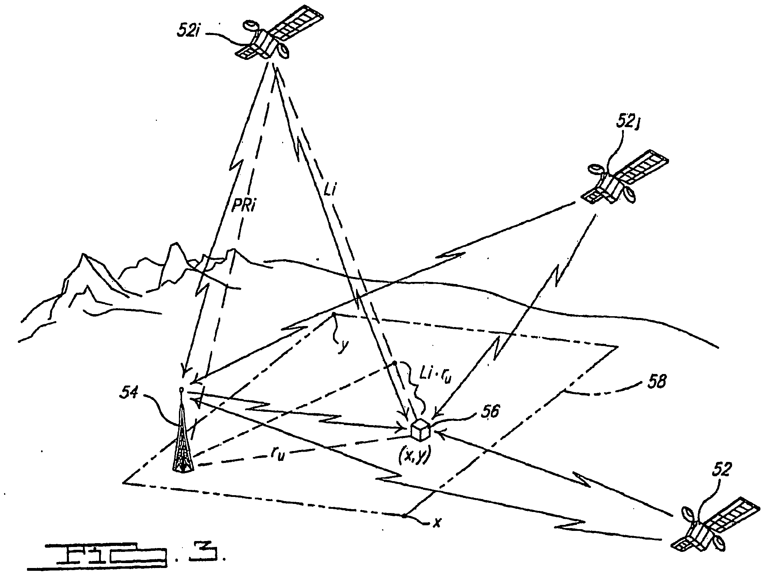

Referring to Figure 3, the search space grid 58 includes a set of search space grid points (x, y) that can be spaced about ¼ to ½ PRN code chip apart (a L1 C/A code chip corresponds to about 300 meters for C/A code and a P code chip corresponds to about 30 meters for P(Y) code). If the dimensions of the two-dimensional search region are about 10 km x 10 km, then the number of search points are about 5,000 to 20,000 for C/A code chips. Additionally, reduction in the initial search region enables significant computation savings. For example, a 1 km x 1 km region allows a factor of 100 savings, or only 50 to 200 grid points for C/A code chips.

Again referring to Figure 3, the received code phases at the location of the user receiver 56 which are offset by a vector $\vec{r}_U$ from the base station 54 will include a range offset relative to the base station 54 of *magnitude* $\hat{Li}\cdot\vec{r}_U$, where $\hat{Li}$ is the Line-Of-Sight (LOS) unit vector to satellite "$i$". Thus, the set of N satellite PRN code pseudo range (PR) measurements received by the user receiver 56 relative to the base station 54 at epoch time $t_0$ is given by:

$$\hat{Li} \bullet \vec{r}_U + b = \left(PRi\right)_U - \left(PRi\right)_{BS}, \text{ i=1, 2,....,N (Equation 1)}$$

where "$b$" is an unknown parameter that represents an unknown offset in a user receiver clock relative to the GPS time. "$N$" consists of all of the PRN code signals used in the processing summed from up to "M" satellites 52 in view. The relative code phase between two GPS PRN code signals "$i$" and "$j$" at epoch time $t_0$ is defined as the following:

$$\Phi ij(to) = PRi(to) - PRj(to) \quad \text{(Equation 2)}$$

where the PRN code ranging measurements i and j may be obtained from two different PRN code signals related to the same satellite 52i or two different PRN code signals obtained from two different satellites 52i, 52j. The relative code phase between two PRN code signals from the same satellite 52 will be almost identical. If the PRN code signals are obtained from two different frequencies from the same satellite 52i, the relative code phase may include an inter-frequency bias.

The difference between relative code phases as seen by the user receiver 56 and the base station 54 is given by:

$$\Delta \Phi ij(to) = \left(\Phi ij\right)_U - \left(\Phi ij\right)_{BS} \quad \text{(Equation 3)}$$

Substituting Equation 2 into Equation 3 and using Equation 1 to simplify the results gives:

$$\Delta \Phi ij(to) = \{\hat{L}i(to) - \hat{L}j(to)\} \bullet \vec{r}_U \quad \text{(Equation 4)}$$

The unknown user clock offset parameter "$b$" drops out of the differential relative code phase expression given by Equation 4. The Equations above, or a variation thereof, are used to predict the relative code phases within the user receiver 56, as the user receiver 56 simultaneously searches, acquires and combines the power from "N" GPS PRN signals in view for the "M" satellites 52. This enables the user receiver 56 to acquire simultaneously "N" PRN codes up to all of the PRN codes for each satellite in view of the user receiver 56 for example, by using $N$ correlators of the user receiver 56 and synchronizing corresponding $N$ PRN code generator outputs chip sequences to phase offsets as given by the relative code phases predicted at a grid point.

The LOS unit vector $\hat{Li}$ can be computed within the user receiver 56 using the almanac or ephemeris data of one of the satellites 52, base station location, and GPS time information, as provided by the base station 54. The LOS unit vector is typically assumed to be the same at both the base station 54 and the user receiver 56. Thus, for practical applications, the timing error between the base station 54 and the user receiver 56 should not exceed about 1 millisecond. A much smaller time synch error, however, is beneficial for reducing the search space associated with receiver clock error. Ideally, the time synch function provided by the base station 54 is accurate to one microsecond or less. This error, however, will also be limited by a size of the search space grid 58.

Once the aiding data is sent to the user receiver 56, the user receiver 56 uses the above equations, or a variation thereof, to solve for the unknown parameter of the user receiver location relative to the base station 54 for the two-dimensional solution $\vec{r}_U = (X, Y)$ for the two-dimensional search grid. Alternatively, if the search space grid 58 comprises the three-dimensional earth-referenced grid, a three-dimensional solution $\vec{r}_U = (X, Y, Z)$ is provided.

Alternatively, a variation of the above Equations allows determination of an absolute user receiver location (e.g. a location relative of the user receiver 56 to an Earth reference centered coordinate system, instead of the base station 54) within the search space grid 58. This absolute location can be obtained by adjusting the $N$ correlators by using the relative code phases at each grid point, as predicted from the satellite ephemeris and clock data, and GPS time synch information supplied from the base station 54, within the processing method of the user receiver. However, this method may further require compensation for the ionospheric delay, which may be a sizable fraction of a code chip.

With static conditions over a small interval, or with frequency and Inertial Measurement Unit (IMU) aiding, the user receiver 56 may also coherently process multiple measurements over an extended interval of time. In such a formulation, other parameters can be added to improve performance. The GPS processing adjusts the PRN coder and signal phase for any change in the satellite motion over the correlation interval relative to the GPS epoch time $t_0$. This adjustment can be determined using the satellite ephemeris and clock data.

In order to coherently combine all PRN code signals, the user receiver 56 performs a combinatorial search over each signal carrier phase angle possibility associated with each PRN code at an initial measurement epoch time. The combinatorial search extends over all of the carriers phase combinations associated with the "N' PRN codes processed. That one carrier phase combination, grid point and user receiver clock combination that produces the strongest "spike" in the combined PRN code signal power output relative to noise level, e.g. a summed output from the "$N$" PNR code correlators that perform a slaved, relative code phase synchronized search as described above, indicates the most probable user receiver location. This search also includes a search over user clock error and a combinatorial search over all carrier phase combinations for all PRN code signals at each grid point. Additional information, such as knowledge of nominal code received power level, estimated noise level in each frequency band, satellite LOS attenuation due to the user receiver's 56 gain pattern relative to an attitude reference, and known LOS obstructions may be useful for eliminating signals and reducing the number of combinations, or weighing the power outputs to improve solution speed or performance. This information can also enable calculation of a suitable threshold to predict the reliability of computed solution operation performed by the user receiver 56.

The user receiver 56 may perform the combinatorial carrier phase search by applying a digital rotation of the sampled signal phase at epoch time $t_0$ for each PRN code signal prior to correlation. For example, an exhaustive search using 45 degree phase increments for five PRN code signals corresponds to $8^5 = 32,768$ possible combinations. The search may be efficiently synthesized using specially designed electronic circuits (e.g. Application Specific Integrated Circuits or ASICS) which implement large numbers of correlators for searching for maximum combined power over the entire search space, this search space consisting of the grid point, user clock error search and carrier phase combinatorial search. Additionally, the use of smaller carrier phase increments will reduce signal processing losses, but also causes an increase in computational burden or electronics hardware complexity. A reduction in carrier phase combination search space is possible using known signal phase relationships for each satellite 52.

At each grid search point, the user receiver 56 assumes that this particular grid search point is a probable location of the user receiver 56. During the processing, the user receiver 56 adjusts each internal PRN coder phase to an associated relative code phase as predicted by the Equations above. Additionally, the user receiver 56 correlates output data of the fore mentioned associated PRN coder with down converted anc frequency corrected data received from the user receiver 56. If the user clock time offset and range offset associated with predicted code phase and the search space grid point corresponds to the actual user receiver range, there will be a power output corresponding to signal presence. If the presumed assumption is incorrect, the power output will correspond to only noise. In challenging environments (e.g. in-doors or under interference conditions), the power output from one correlator may be insufficient to reliably detect the PRN code signal. When the power output from the "$N$" PRN code signals are coherently combined, the reliability of the detection of the PRN code signals are much improved. By coherently combining the correlator outputs from each of the received GPS satellite ranging signals, the PRN code signals can be acquired simultaneously at the probable user receiver location.

Following an initial search of the PRN code signals, detection of the PRN codes signals, determination of the probable location of the user receiver 56, a subsequent refining search for the location of the user receiver 56 location may be performed. Such refinement may involve adjusting the search space grid 58 in smaller steps (e.g. 1/10 code chip spacing) relative to an initial grid point solution until the power is further maximized, or by using small code phase adjustments to implement code phase error processing.

For the base station 54 and the user receiver 56 processing of data associated with multiple frequency bands, the inter-frequency bias for the base station 54 and the user receiver 56 is kept small relative to a code chip (C/A code chip is about 1 microsecond, and P(Y) code chip is about 0.1 microsecond). Alternatively, an additional small search layer associated with this bias may be necessary if coherent combining of all signals from all frequency bands is desired. However, significant processing gain may be achieved by only processing PRN code signal from one frequency band. For example, each satellite 52 may have two civil and two military signals on Earth coverage L1, so that ten satellites 52 in view could deliver a factor 40 (16 dB) advantage over the acquisition of one signal only, assuming satellite PRN code signals of comparable received power levels.

Without a high-quality, accurate and stable user receiver 56 oscillator or the base station frequency aiding as described above, an additional search over the user receiver oscillator frequency offset may also be needed, and coherent integration time duration may be limited. In this case, the extent of the additional frequency search space will depend on the frequency error of the oscillator, and the duration of the coherent integration time will depend on the stability of the oscillator.

To extend coherent integration time for each PRN code, the processing includes frequency correction for a satellite 52 Doppler relative to the user receiver 56. For long integration times, in order to maintain phase coherency over the correlation interval, the captured GPS signal sample data or internally generated code and phase data is also phase corrected for any satellite 52 or significant user receiver 56 motion over the correlation interval. On the other hand, an operator can eliminate the user receiver motion degradation by simply holding the user receiver 56 still for a few seconds after pushing a button associated with the user receiver 56 while the broadcast GPS signal data is captured. Additionally, correction for the user receiver 56 differential Earth rotation affects is not necessary for search area grids within 10 km x 10 km.

In another embodiment, if GPS Nav data stripping is applied (e.g. to extend the coherent integration time beyond the NAV message data bit transition boundary), to facilitate this data stripping, the user receiver 56 preferably samples at an appropriate time when the data bits can be predicted over the correlation interval. The base station 54 preferably provides the aiding and code phase information near the same time.

In a further embodiment, if message data cannot be predicted and relayed to the user receiver 56 in advance of signal reception by the user receiver 56, the user receiver 56 can buffer the digitized data, and wait for a feed forward of the NAV message data from the base station 54 wireless assist link, prior to processing.

In yet another embodiment, the user receiver 56 coherently integrates on dataless chips or channels, which will be available on future modernized L2 and L5 civil and other signals.

It should be noted that reduced performance is possible along with reduced processing complexity, with short coherent integration time durations limited to one NAV data symbol interval, and if the correlator power outputs are combined non-coherently, e.g. by squaring the power outputs from In-phase (I) and quadra-phase (Q) channels, and then summing $I^2+Q^2$ for all of the PRN code channels.

In another embodiment, instead of the base station 54 providing the aiding data, the aiding data may be sent from a cell phone station, a communications satellite that also provides a time synch and geolocation service, a navigation signal-of-opportunity, or derived from a suitably designed second GPS/wireless device within a local network of GPS/ wireless devices.

In a further embodiment, in challenging environments, repeated snapshot type of acquisition/position fixes may enable a robust acquisition/reacquisition and subsequent quasi-continuous time navigation capability in situations when continuous tracking of the GPS PRN code signals may fail. In less challenging environments, a hand-off of the above derived solution to initialize satellite PRN code and carrier signal tracking loops, vector delay lock loop, or ultra-tight coupling implementation to continuously track all of the GPS satellite ranging signals in view, validate the solution, demodulate the Nav message data, and refine the position, time, and velocity estimates. In particular, this implementation herein also provides a robust technique to initialize ultra-tight GPS/INS (inertial navigation system) coupling implementations in interference prone environments.

The method 10 and system 50 provided herein enables automatic removal of errors common to both the base station 54 and user receiver 56 and is immune to multipath affecting one or a few satellite ranging signals. Processing by the base station 54 helps to minimize an introduction of multipath errors into ranging data sent to the user receiver 56.

**Claims**

1. A method (10) for rapidly acquiring and using a plurality of satellite ranging signals having satellite codes to rapidly determine a real time position of a user receiver (56), the method comprising:

   using (12) a wireless assist link to transmit to the user receiver, from a base station (54), a set of initialization data and base-station-location data to limit a search space grid (58), in which the user receiver is located, to predetermined geographic dimensions;
   using (14) the base station to transmit to the user receiver a time synch function to enable the user receiver to synchronize a user receiver clock, and satellite ranging data as received at the base station at an epoch time;
   using (16) the user receiver to search within the search space grid based on the base-station-location data and acquire simultaneously at least one of the satellite codes from a plurality of satellites (52) in view of the user receiver; and
   **characterized by**
   using (18) the user receiver to coherently combine correlator outputs from each of the received satellite codes and to detect therefrom a probable location of the user receiver, wherein

the operation of coherently combining the correlator outputs from each of the received satellite codes comprises:

  analyzing a correlator output produced by each of the received satellite codes at each of a plurality of grid point locations in the geographic dimensions;
  summing coherently all of the correlator outputs for each of the plurality of grid point locations; and determining when a summed correlator output indicates a maximum power value for the plurality of grid point locations within the geographic dimensions to select the probable location of the user receiver.

2. The method of claim 1, further comprising: using the user receiver to detect a grid point location within the predetermined geographic dimensions at which the received satellite codes will be coherently combined.

3. The method of claim 1, wherein the set of initialization data and the time synch function are used to predict at least one satellite code phase for each of the plurality of satellites in the search grid point.

4. The method of claim 3, wherein each satellite code signal phase at a grid point is predicted using geometric relationships relative to the base station.

5. The method of claim 4, wherein each satellite predicted code phases at the grid point is used to acquire simultaneously a plurality of satellite ranging signal code phases as received by the user receiver.

6. The method of claim 1, further comprising:

  providing time aiding to reduce error time of the user receiver and aid acquisition of the satellite codes;
  providing frequency aiding to reduce or eliminate the frequency search space; and
  adjusting a code phase for any change in satellite motion since the epoch time.

7. The method of claim 1, wherein the geographic dimensions comprises a two-dimensional grid or a three-dimensional grid of Earth coordinates.

8. The method of claim 7, wherein the two-dimensional grid comprises no greater than about 10 km x 10 km square.

9. The method of claim 1, wherein the set of initialization data comprises at least one of:

  almanac data;
  satellite ephemeris data;
  clock data; and
  size or boundary data, and base station ranging measurements for the search space grid.

10. The method of claim 1, further comprising:

  searching over at least one carrier phase combination within the search space grid to detect and acquire simultaneously all of the GPS satellite ranging signals sent by the satellites in view of the user receiver;
  providing time aiding to reduce time error of the user receiver and aid the search;
  providing frequency aiding to reduce or eliminate frequency search space; and
  estimating the probable location for the user receiver relative to the base station based on selecting a combined signal power that corresponds to a maximum combined power over the search space grid.

11. The method of claim 10, wherein the maximum power value is indicative of a highest summed power output of all said satellite ranging signals present for each of the grid point locations that identifies the probable location of the user receiver.

12. The method of claim 1, further comprising:

  reducing the search space grid based on the probable location;
  searching over at least one carrier phase combination within a reduced search area grid to detect and acquire simultaneously a second set of satellite ranging signals;
  detecting a grid point location within the reduced search space grid;
  adjusting a code phase for any change in satellite motion since epoch time;

combining coherently each satellite code of the second set of satellite ranging signals at the grid point location to produce a second summedpower output;

determining whether the second summedpower output indicates a refined location for the user receiver, and estimating the refined location of the user receiver relative to the base station within the reduced search area grid.

13. The method of claim 1, wherein the set of initialization data comprises almanac or satellite ephemeris and clock data, satellite PRN ranging data including satellite ranging measuring data as received at the base station at an epoch time, and size and boundary data to limit the search space grid, in which the user receiver is located.

14. A global positioning system "GPS" for rapidly determining a position of a user receiver from satellite ranging signals from a plurality of satellites in view of the user receiver, comprising:

a plurality of GPS satellites (52) configured to produce a plurality of GPS satellite ranging signals having a pseudo random code;

a base station (54) configured to generate a set of initialization data, time synch function, and base-station-location data to limit a search space grid to predetermined geographic dimensions, the base station is further configured to receive the plurality of GPS satellite ranging signals to produce time aiding data to synchronize a user receiver clock to reduce time error for the search space grid and aid acquisition of the plurality of GPS ranging signals and to transmit the time aiding data and the set of initialization data; and

a user receiver (56) in wireless communication with the base station and is configured to receive the set of initialization data and the time aiding data, the user receiver is further configured to receive the time synch function to synchronize a user receiver clock and ranging signals ranging data as received at the base station at an epoch time, the user receiver is operable to search within the search space grid based on the base-station-location data and acquire simultaneously at least one of the ranging signals from the plurality of satellites in view of the user receiver;

the user receiver **characterized by** being further configured to coherently combine correlator power outputs of received ranging signals, and to select therefrom a probable location of the user receiver; wherein

the operation of coherently combining the correlator outputs from each of the received satellite codes comprises the user receiver being configured to:

analyze a correlator output produced by each of the received satellite codes at each of a plurality of grid point locations in the geographic dimensions;

sum coherently all of the correlator outputs for each of the plurality of grid point locations; and

determine when a summed correlator output indicates a maximum power value for the plurality of grid point locations within the geographic dimensions to select the probable location of the user receiver.

15. The system of claim 14, wherein the user receiver is further configured to refine the probable location by searching over at least one carrier phase combination within a reduced search area grid and to estimate a refined location of the user receiver relative to the base station.

**Patentansprüche**

1. Verfahren (10) zum schnellen Erfassen und Verwenden einer Mehrzahl von Satellitenortungssignalen mit Satellitencodes zum schnellen Bestimmen einer Echtzeitposition eines Benutzerempfängers (56), wobei das Verfahren Folgendes aufweist:

Verwenden (12) einer drahtlosen Hilfsverbindung zum Übertragen, von einer Basisstation (54) zum Benutzerempfänger, einer Zusammenstellung von Initialisierungsdaten und Basisstation-Ortsdaten zum Begrenzen eines Suchraumgitters (58), in dem sich der Benutzerempfänger befindet, auf vorbestimmte geographische Abmessungen;

Verwenden (14) der Basisstation zum Übertragen einer Zeitsynchronisierungsfunktion zum Benutzerempfänger, sodass der Benutzerempfänger einen Benutzerempfänger-Takt synchronisieren kann, und von Satellitenortungsdaten, die von der Basisstation zu einer Epochenzeit empfangen werden;

Verwenden (16) des Benutzerempfängers zum Suchen, innerhalb des Suchraumgitters (58), auf der Grundlage der Basisstation-Ortsdaten und zum gleichzeitigen Erfassen zumindest eines der Satellitencodes von einer Mehrzahl von Satelliten (52) im Blickfeld des Benutzerempfängers; und

**gekennzeichnet durch**

Verwenden (18) des Benutzerempfängers zum kohärenten Kombinieren von Korrelatorausgängen von jedem der empfangenen Satellitencodes und zum Ermitteln einer wahrscheinlichen Position des Benutzerempfängers daraus, wobei
der Vorgang des kohärenten Kombinierens der Korrelatorausgänge von jedem der empfangenen Satellitencodes Folgendes aufweist:

Analysieren eines Korrelatorausgangs, der von jedem der empfangenen Satellitencodes erzeugt wird, an jeder einer Mehrzahl von Gitterpunktpositionen in den geographischen Abmessungen;
kohärentes Summieren aller Korrelatorausgänge für jede der Mehrzahl von Gitterpunktpositionen; und
Bestimmen, wann ein summierter Korrelatorausgang einen maximalen Leistungswert für die Mehrzahl von Gitterpunktpositionen in den geographischen Abmessungen anzeigt, um die wahrscheinliche Position des Benutzerempfängers auszuwählen.

2. Verfahren nach Anspruch 1, des Weiteren aufweisend: Verwenden des Benutzerempfängers zum Ermitteln einer Gitterpunktposition innerhalb der vorbestimmten geographischen Abmessungen, an der die empfangenen Satellitencodes kohärent kombiniert werden.

3. Verfahren nach Anspruch 1, wobei die Zusammenstellung von Initialisierungsdaten und die Zeitsynchronisierungsfunktion verwendet werden, um zumindest eine Phase eines Satellitencodes für jeden der Mehrzahl von Satelliten am Punkt des Suchgitters vorauszusagen.

4. Verfahren nach Anspruch 3, wobei jede Satellitencodesignal-Phase an einem Gitterpunkt anhand von geographischen Beziehungen gegenüber der Basisstation vorausgesagt wird.

5. Verfahren nach Anspruch 4, wobei jede vorausgesagte Phase eines Satellitencodes am Gitterpunkt zum gleichzeitigen Erfassen einer Mehrzahl von Phasen von Satellitenortungssignalcodes, die vom Benutzerempfänger empfangen werden, verwendet wird.

6. Verfahren nach Anspruch 1, des Weiteren aufweisend:

Bereitstellen von Zeit, um das Verringern der Fehlerzeit des Benutzerempfängers und Erfassen der Satellitencodes zu unterstützen;
Bereitstellen einer Frequenz, um beim Reduzieren oder Eliminieren des Frequenzsuchraums zu helfen; und
Anpassen einer Code-Phase für jede Veränderung der Satellitenbewegung seit der Epochenzeit.

7. Verfahren nach Anspruch 1, wobei die geographischen Abmessungen ein zweidimensionales Gitter oder ein dreidimensionales Gitter von Erdkoordinaten umfassen.

8. Verfahren nach Anspruch 7, wobei das zweidimensionale Gitter maximal ein Quadrat von 10 km x 10 km umfasst.

9. Verfahren nach Anspruch 1, wobei die Zusammenstellung von Initialisierungsdaten zumindest einen der folgenden Datentypen aufweist:

Almanach-Daten;
Ephemeridendaten der Satelliten;
Taktdaten; und
Größen- oder Begrenzungsdaten und Basisstations-Ortungsmessungen für das Suchraumgitter.

10. Verfahren nach Anspruch 1, des Weiteren aufweisend:

Durchsuchen zumindest einer Trägerphasenkombination im Suchraumgitter zum Ermitteln und gleichzeitigen Erfassen aller GPS-Satellitenortungssignale, die von den Satelliten im Blickfeld des Benutzerempfängers gesendet werden;
Bereitstellen von Zeit, um beim Reduzieren von Zeitfehlern des Benutzerempfängers und bei der Suche zu helfen;
Bereitstellen einer Frequenz, um beim Reduzieren oder Eliminieren des Frequenzsuchraums zu helfen; und
Schätzen der wahrscheinlichen Position des Benutzerempfängers relativ zur Basisstation auf der Grundlage des Auswählens einer kombinierten Signalleistung, die einer maximalen kombinierten Leistung im Suchraumgitter entspricht.

**11.** Verfahren nach Anspruch 10, wobei der maximale Leistungswert einen höchsten summierten Leistungsausgang aller für jede der Gitterpunktpositionen vorhandenen Satellitenortungssignale anzeigt, der die wahrscheinliche Position des Benutzerempfängers identifiziert.

**12.** Verfahren nach Anspruch 1, des Weiteren aufweisend:

Verkleinern des Suchraumgitters auf der Grundlage der wahrscheinlichen Position;
Durchsuchen zumindest einer Trägerphasenkombination in einem verkleinerten Suchbereichsgitter zum Ermitteln und gleichzeitigen Erfassen einer zweiten Zusammenstellung von Satellitenortungssignalen;
Ermitteln einer Gitterpunktposition im verkleinerten Suchraumgitter;
Anpassen einer Code-Phase für jede Veränderung der Satellitenbewegung seit der Epochenzeit;
kohärentes Kombinieren aller Satellitencodes der zweiten Zusammenstellung von Satellitenortungssignalen an der Gitterpunktposition, um einen zweiten summierten Leistungsausgang zu erzeugen;
Bestimmen, ob der zweite summierte Leistungsausgang eine genauere Position des Benutzerempfängers anzeigt; und
Schätzen der genaueren Position des Benutzerempfängers relativ zur Basisstation im verkleinerten Suchbereichsgitter.

**13.** Verfahren nach Anspruch 1, wobei die Zusammenstellung von Initialisierungsdaten folgende Daten aufweist: Almanach-Daten oder Ephemeridendaten der Satelliten und Taktdaten, Satelliten-PRN-Ortungsdaten einschließlich Satellitenortungs-Messdaten, die von der Basisstation zu einer Epochenzeit empfangen werden, und Größen- und Begrenzungsdaten zum Begrenzen des Suchraumgitters, in dem sich der Benutzerempfänger befindet.

**14.** Globales Positionsbestimmungs-System "GPS" zum schnellen Bestimmen einer Position eines Benutzerempfängers aus Satellitenortungssignalen von einer Mehrzahl von Satelliten im Blickfeld des Benutzerempfängers, aufweisend:

eine Mehrzahl von GPS-Satelliten (52), die konfiguriert sind, eine Mehrzahl von GPS-Satellitenortungssignalen mit einem Pseudozufallscode zu erzeugen;
eine Basisstation (54), die konfiguriert ist, eine Zusammenstellung von Initialisierungsdaten, eine Zeitsynchronisierungsfunktion und Basisstation-Ortsdaten zu generieren, um ein Suchraumgitter auf vorbestimmte geographische Abmessungen zu begrenzen, wobei die Basisstation des Weiteren konfiguriert ist, die Mehrzahl von GPS-Satellitenortungssignalen zu empfangen, um Zeithilfsdaten zu erzeugen, um einen Benutzerempfänger-Takt zum Reduzieren von Zeitfehlern des Suchraumgitters zu synchronisieren und beim Erfassen der Mehrzahl von GPS-Ortungssignalen zu helfen, und die Zeithilfsdaten und die Zusammenstellung von Initialisierungsdaten zu übertragen; und
einen Benutzerempfänger (56), der drahtlos mit der Basisstation kommuniziert und konfiguriert ist, die Zusammenstellung von Initialisierungsdaten und die Zeithilfsdaten zu empfangen, wobei der Benutzerempfänger des Weiteren konfiguriert ist, die Zeitsynchronisierungsfunktion zum Synchronisieren eines Benutzerempfänger-Takts und von Ortungsdaten von Ortungssignalen, die von der Basisstation zu einer Epochenzeit empfangen werden, zu empfangen, wobei der Benutzerempfänger betreibbar ist, innerhalb des Suchraumgitters auf der Grundlage der Basisstation-Ortsdaten zu suchen und gleichzeitig zumindest eines der Ortungssignale von der Mehrzahl von Satelliten im Blickfeld des Benutzerempfängers zu erfassen;
wobei der Benutzerempfänger **dadurch gekennzeichnet ist, dass** er des Weiteren konfiguriert ist, Korrelator-Leistungsausgänge von empfangenen Ortungssignalen kohärent zu kombinieren und daraus eine wahrscheinliche Position des Benutzerempfängers auszuwählen, wobei
der Vorgang des kohärenten Kombinierens der Korrelatorausgänge von jedem der empfangenen Satellitencodes den Umstand aufweist, dass der Benutzerempfänger für Folgendes konfiguriert ist:

Analysieren eines Korrelatorausgangs, der von jedem der empfangenen Satellitencodes erzeugt wird, an jeder einer Mehrzahl von Gitterpunktpositionen in den geographischen Abmessungen;
kohärentes Summieren aller Korrelatorausgänge für jede der Mehrzahl von Gitterpunktpositionen; und
Bestimmen, wann ein summierter Korrelatorausgang einen maximalen Leistungswert für die Mehrzahl von Gitterpunktpositionen in den geographischen Abmessungen anzeigt, um die wahrscheinliche Position des Benutzerempfängers auszuwählen.

**15.** System nach Anspruch 14, wobei der Benutzerempfänger des Weiteren konfiguriert ist, die wahrscheinliche Position durch Durchsuchen zumindest einer Trägerphasenkombination in einem verkleinerten Suchbereichsgitter genauer zu bestimmen und eine genauere Position des Benutzerempfängers gegenüber der Basisstation zu schätzen.

## Revendications

**1.** Procédé (10) pour acquérir et utiliser rapidement une pluralité de signaux télémétriques de satellite possédant des codes de satellite pour déterminer rapidement une position en temps réel d'un récepteur utilisateur (56), le procédé comprenant les étapes consistant à :

utiliser (12) une liaison d'assistance sans fil pour transmettre au récepteur utilisateur, à partir d'une station de base (54), un jeu de données d'initialisation et des données de localisation de station de base pour limiter une grille d'espace de recherche (58), dans laquelle le récepteur utilisateur est localisé, à des dimensions géographiques prédéterminées ;
utiliser (14) la station de base pour transmettre au récepteur utilisateur une fonction de synchronisation temporelle pour permettre au récepteur utilisateur de synchroniser une horloge de récepteur utilisateur, et des données télémétriques de satellite telles qu'elles sont reçues à la station de base à un temps d'époque ;
utiliser (16) le récepteur utilisateur pour réaliser une recherche à l'intérieur de la grille d'espace de recherche en fonction des données de localisation de station de base et acquérir simultanément au moins un des codes de satellite à partir d'une pluralité de satellites (52) visibles du récepteur utilisateur ; et
**caractérisé par** l'étape consistant à
utiliser (18) le récepteur utilisateur pour combiner de façon cohérente des sorties de corrélateur à partir de chacun des codes de satellite reçus et pour détecter à partir de ceux-ci une localisation probable du récepteur utilisateur, dans lequel
l'opération consistant à combiner de façon cohérente les sorties de corrélateur à partir de chacun des codes de satellite reçus comprend les étapes consistant à :

analyser une sortie de corrélateur produite par chacun des codes de satellite reçus à chacune d'une pluralité de localisations de point de grille dans les dimensions géographiques ;
sommer de façon cohérente toutes les sorties de corrélateur pour chacune de la pluralité de localisations de point de grille ; et
déterminer l'instant auquel une sortie de corrélateur sommée indique une valeur de puissance maximum pour la pluralité de localisations de point de grille à l'intérieur des dimensions géographiques pour sélectionner la localisation probable du récepteur utilisateur.

**2.** Procédé selon la revendication 1, comprenant en outre l'étape consistant à utiliser le récepteur utilisateur pour détecter une localisation de point de grille à l'intérieur des dimensions géographiques à laquelle les codes de satellite reçus seront combinés de façon cohérente.

**3.** Procédé selon la revendication 1, dans lequel le jeu de données d'initialisation et la fonction de synchronisation temporelle sont utilisés pour prédire au moins une phase de code de satellite pour chacun de la pluralité de satellites dans le point de grille de recherche.

**4.** Procédé selon la revendication 3, dans lequel chaque phase de signal de code de satellite à un point de grille est prédite en utilisant des relations géométriques par rapport à la station de base.

**5.** Procédé selon la revendication 4, dans lequel chaque phase de code de satellite prédite au point de grille est utilisée pour acquérir simultanément une pluralité de phases de code de signal télémétrique de satellite telles qu'elles sont reçues par le récepteur utilisateur.

**6.** Procédé selon la revendication 1, en outre comprenant les étapes consistant à :

fournir une aide temporelle pour réduire un temps d'erreur du récepteur utilisateur et aider l'acquisition des codes de satellite ;
fournir une aide fréquentielle pour réduire ou éliminer l'espace de recherche fréquentielle ; et
ajuster une phase de code pour tout changement de mouvement de satellite depuis le temps d'époque.

**7.** Procédé selon la revendication 1, dans lequel les dimensions géographiques comprennent une grille bidimensionnelle ou une grille tridimensionnelle de coordonnées terrestres.

**8.** Procédé selon la revendication 7, dans lequel la grille bidimensionnelle n'est pas supérieure à un carré d'environ 10 km x 10 km.

**9.** Procédé selon la revendication 1, dans lequel le jeu de données d'initialisation comprend au moins un élément parmi :

des données d'almanach ;
des données éphémérides de satellite ;
des données d'horloge ; et
des données de taille ou de limite, et des mesures télémétriques de station de base pour la grille d'espace de recherche.

**10.** Procédé selon la revendication 1, comprenant en outre les étapes consistant à :

réaliser une recherche sur au moins une combinaison de phase de porteuse à l'intérieur de la grille d'espace de recherche pour détecter et acquérir simultanément tous les signaux télémétriques de satellite GPS envoyés par les satellites visibles du récepteur utilisateur ;
fournir une aide temporelle pour réduire une erreur temporelle du récepteur utilisateur et aider la recherche ;
fournir une aide fréquentielle pour réduire ou éliminer un espace de recherche fréquentielle ; et
estimer la localisation probable pour le récepteur utilisateur par rapport à la station de base en fonction de la sélection d'une puissance de signal combinée qui correspond à une puissance combinée maximum sur la grille d'espace de recherche.

**11.** Procédé selon la revendication 10, dans lequel la valeur de puissance maximum est indicative d'une sortie de puissance sommée la plus élevée de tous lesdits signaux télémétriques de satellite présents pour chacune des localisations de point de grille qui identifie la localisation probable du récepteur utilisateur.

**12.** Procédé selon la revendication 1, comprenant en outre les étapes consistant à :

réduire la grille d'espace de recherche en fonction de la localisation probable ;
réaliser une recherche sur au moins un combinaison de phase de porteuse à l'intérieur d'une grille de zone de recherche réduite pour détecter et acquérir simultanément un second jeu de signaux télémétriques de satellite ;
détecter une localisation de point de grille à l'intérieur de la grille d'espace de recherche réduite ;
ajuster une phase de code pour tout changement de mouvement de satellite depuis le temps d'époque ;
combiner de façon cohérente chaque code de satellite du second jeu de signaux télémétriques de satellite à la localisation de point de grille pour produire une seconde sortie de puissance sommée ;
déterminer si la seconde sortie de puissance sommée indique une localisation raffinée pour le récepteur utilisateur ; et
estimer la localisation raffinée du récepteur utilisateur par rapport à la station de base à l'intérieur de la grille de zone de recherche réduite.

**13.** Procédé selon la revendication 1, dans lequel le jeu de données d'initialisation comprend des données d'almanach ou éphémérides de satellite et d'horloge, des données télémétriques PRN de satellite comprenant des données de mesures télémétriques de satellite telles qu'elles sont reçues à la station de base à un temps d'époque, et des données de taille et de limite pour limiter la grille d'espace de recherche, dans laquelle le récepteur utilisateur est localisé.

**14.** Système mondial de localisation « GPS » pour déterminer rapidement une position d'un récepteur utilisateur à partir de signaux télémétriques de satellite à partir d'une pluralité de satellites visibles du récepteur utilisateur, comprenant :

une pluralité de satellites GPS (52) configurés pour produire une pluralité de signaux télémétriques de satellite GPS possédant un code pseudo-aléatoire ;
une station de base (54) configurée pour générer un jeu de données d'initialisation, une fonction de synchronisation temporelle, et des données de localisation de station de base pour limiter une grille d'espace de recherche à des dimensions géographiques prédéterminées, la station de base est en outre configurée pour recevoir la pluralité de signaux télémétriques de satellite GPS pour produire des données d'aide temporelle pour synchroniser une horloge de récepteur utilisateur pour réduire une erreur temporelle pour la grille d'espace de recherche et aider l'acquisition de la pluralité de signaux télémétriques GPS et pour transmettre les données d'aide temporelle et le jeu de données d'initialisation ; et

un récepteur utilisateur (56) en communication sans fil avec la station de base et configuré pour recevoir le jeu de données d'initialisation et les données d'aide temporelle, le récepteur utilisateur est en outre configuré pour recevoir la fonction de synchronisation temporelle pour synchroniser une horloge de récepteur utilisateur et des données télémétriques de signaux télémétriques telles qu'elles sont reçues à la station de base à un temps d'époque, le récepteur utilisateur est utilisable pour réaliser une recherche à l'intérieur de la grille d'espace de recherche en fonction des données de localisation de station de base et acquérir simultanément au moins un des signaux télémétriques à partir de la pluralité de satellites visibles du récepteur utilisateur ;

le récepteur utilisateur étant **caractérisé en ce qu'**il est en outre configuré pour combiner de façon cohérente des sorties de puissance de corrélateur de signaux télémétriques reçus, et pour sélectionner à partir de ceux-ci une localisation probable du récepteur utilisateur ; dans lequel

l'opération consistant à combiner de façon cohérente les sorties de corrélateur à partir de chacun des codes de satellite reçus comprend le fait que le récepteur utilisateur est configuré pour :

analyser une sortie de corrélateur produite par chacun des codes de satellite reçus à chacune d'une pluralité de localisations de point de grille dans les dimensions géographiques ;

sommer de façon cohérente toutes les sorties de corrélateur pour chacune de la pluralité de localisations de point de grille ; et

déterminer l'instant auquel une sortie de corrélateur sommée indique une valeur de puissance maximum pour la pluralité de localisations de point de grille à l'intérieur des dimensions géographiques pour sélectionner la localisation probable du récepteur utilisateur.

15. Système selon la revendication 14, dans lequel le récepteur utilisateur est en outre configuré pour raffiner la localisation probable en réalisant une recherche sur au moins une combinaison de phase de porteuse à l'intérieur d'une grille de zone de recherche réduite et pour estimer une localisation raffinée du récepteur utilisateur par rapport à la station de base.

10

Using A Wireless Assist Link To Transmit To The User Receiver, From A Base Station, A Set Of Initialization Data And Base-Station-Location Data To Limit A Search Space Grid, In Which The User Receiver Is Located, To Predetermined Graphic Dimensions ⌐ 12

Using The Base Station To Transmit To The User Receiver A Time Sync Function To Enable The User Receiver To Synchronize A User Receiver Clock, And Satellite Ranging Data As Received At The Base Station At An Epoch Time

14

Using The User Receiver To Search Within The Search Space Grid Based On The Base-Station-Location Data And Acquire Simultaneously. At Least One Of The Satellite Codes From A Plurality Of Satellites In View Of The User Receiver

16

Using The User Receiver To Combine Coherently Received Satellite Codes And To Detect Therefrom A Probable Location Of The User Receiver ⌐ 18

FIG. 1.

50

52 — Satellite 1     Satellite 2  ⌐ 52     Satellite M     ⌐ 52
52 —                                . . .

54 — Base Station               GPS User Receiver — 56

FIG. 2.

EP 2 069 817 B1

FIG. 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0036431 A